# EUROPEAN PATENT APPLICATION

(11) **EP 4 072 053 A1**
(43) Date of publication of application: **12.10.2022**
(21) Application number: 20911777.9
(22) Date of filing: 06.01.2020
(51) Int. Cl.: H04L 1/22, H04L 7/04

(54) **CLOCK SWITCHING METHOD, DEVICE, AND STORAGE MEDIUM**

(71) Applicant: Huawei Technologies Co., Ltd., Shenzhen, Guangdong 518129 (CN)
(72) Inventor: LI, Chao, Shenzhen, Guangdong 518129 (CN); ZHANG, Xingxin, Shenzhen, Guangdong 518129 (CN); WANG, Xuehuan, Shenzhen, Guangdong 518129 (CN); BAO, Pengxin, Shenzhen, Guangdong 518129 (CN)
(74) Representative: Pfenning, Meinig & Partner mbB
(86) International application number: PCT/CN2020/070534
(87) International publication number: WO 2021/138779

(57) **Abstract**

This application discloses a clock switching method, a device, and a storage medium, to shorten clock switching duration when a master clock device is in a faulty state. In embodiments of this application, a slave clock device may monitor a working status of the master clock device, and sends first indication information when discovering that the master clock device is in the faulty state, so that a communications device synchronizes with a system clock of the communications device based on time information of the slave clock device. This process may save time consumed for executing a BMCA used to determine a best master clock device.

## Description

### TECHNICAL FIELD

This application relates to the communications field, and in particular, to a clock switching method, a device, and a storage medium.

### BACKGROUND

In a communications system, a clock is very important, and various types of control and data transmission need to depend on the clock. The clock is the "heart" of a communications device, and the communications device stops working without the clock. To ensure robustness of the system, the system configures two clock sources: a master clock device and a slave clock device. During normal working, a system clock of each node device keeps synchronization with time information of the master clock device. If the master clock device is faulty, the system needs to switch to the slave clock device as soon as possible, to ensure a time synchronization error requirement.

In the conventional technology, the master clock device periodically sends a synchronization (sync) packet in a normal working state. As specified in a protocol, if the node device detects that two or more consecutive synchronization packets are lost, the node device determines that the master clock device is faulty. Each node device in the system sends an announcement (announce) packet carrying capability indication information of the node device, and calculates a best master clock by using a best master clock algorithm (Best Master Clock Algorithm, BMCA) with reference to a capability of each node device in the system. After receiving a synchronization (sync) packet sent by the determined best master clock, the node device switches a current working clock to the calculated best master clock.

It can be learned from the foregoing process that, from a moment at which the node device loses the synchronization packet sent by the master clock device to a moment at which the node device switches the current working clock to the calculated best master clock, this process needs to include duration for sending two synchronization packets, duration for receiving an announcement packet sent by another node, duration for executing the BMCA, and duration for waiting for receiving the synchronization (sync) packet sent by the best master clock. This process occupies a long period of time, and the clock of the node device is in an autonomous state in this process. Because the system clock of the node device has no clock source as a reference, the system clock of the node device may be offset, resulting in a large time error. Consequently, the entire system may be run unstably or even crashed.

### SUMMARY

This application provides a clock switching method, a device, and a storage medium, to shorten clock switching duration when a master clock device is in a faulty state.

According to a first aspect, an embodiment of this application provides a clock switching method, including: A slave clock device monitors a working status of a master clock device, where the working status includes a normal working state or a faulty state. When the slave clock device determines that the master clock device is in the faulty state, the slave clock device sends first indication information, where the first indication information indicates to synchronize with a system clock based on time information of the slave clock device. The slave clock device may monitor the working status of the master clock device, and sends the first indication information when discovering that the master clock device is in the faulty state, so that a first communications device synchronizes with a system clock of the first communications device based on the time information of the slave clock device. This process may save time consumed for executing a BMCA used to determine a best master clock device. In addition, the slave clock sends the first indication information after discovering that the master clock device is faulty, and duration for this part is mainly duration consumed for exchanging command data in a system, is at a level of ns, and may be ignored. Therefore, compared with a solution in the conventional technology in which a best master clock device is calculated by sending an announcement packet and executing a BMCA, the solution in embodiments of this application can greatly shorten clock switching duration.

To improve solution flexibility, in a possible implementation, that a slave clock device monitors a working status of a master clock device includes: The slave clock device continuously or periodically monitors the working status of the master clock device.

In a possible implementation, that the slave clock device continuously monitors the working status of the master clock device includes: The slave clock device continuously monitors the working status of the master clock device by using a signal that is output over a link connected to the master clock device, where the signal transmitted over the link includes an electrical signal or an optical signal, and the signal transmitted over the link is used to indicate that the master clock device is in the normal working state. That the slave clock device determines that the master clock device is in the faulty state includes: If the slave clock device does not receive the signal over the link, the slave clock device determines that the master clock device is in the faulty state. In an optional implementation, if the slave clock device does not receive the signal over the link within second preset duration, the slave clock device determines that the master clock device is in the faulty state. In this way, the slave clock device may discover in time that the master clock device is faulty, to further shorten clock switching duration.

In a possible implementation, that the slave clock device continuously monitors the working status of the master clock device includes: The slave clock device continuously monitors the working status of the master clock device by using an electrical signal that is output over a link connected to the master clock device, where the electrical signal includes a first level signal and a second level signal, the first level signal in the electrical signal is used to indicate that the master clock device is in the working state, and the second level signal in the electrical signal is used to indicate that the master clock device is in the faulty state. That the slave clock device determines that the master clock device is in the faulty state includes: If the electrical signal received by the slave clock device over the link is the second level signal, the slave clock device determines that the master clock device is in the faulty state. In this way, solution flexibility can be improved.

In a possible implementation, that the slave clock device periodically monitors the working status of the master clock device includes:
The slave clock device monitors the working status of the master clock device in a manner of periodically receiving a first message by using first duration as a periodicity, where the first message is periodically sent by the master clock device to the slave clock device in the normal working state by using the first duration as the periodicity. That the slave clock device determines that the master clock device is in the faulty state includes: If the slave clock device does not successfully receive a next first message within second duration after the slave clock device most recently receives the first message, the slave clock device determines that the master clock device is in the faulty state, where the second duration includes the first duration and first preset duration. The first duration meets one of the following content: The first duration is less than duration between moments for sending two adjacent first synchronization packets by the master clock device to the slave clock device, where the first synchronization packet includes time information of the master clock device. Alternatively, the first duration is less than duration between moments for sending two adjacent first announcement packets by the master clock device to the slave clock device, where the first announcement packet includes capability indication information of the master clock device. Alternatively, the first duration is less than third duration, where the third duration is a smaller value in duration between moments for sending two adjacent first synchronization packets by the master clock device to the slave clock device and duration between moments for sending two adjacent first announcement packets by the master clock device to the slave clock device. Alternatively, the first duration is less than duration between moments for sending two adjacent second synchronization packets by the master clock device to a switch device, where the second synchronization packet includes time information of the master clock device. Alternatively, the first duration is less than duration between moments for sending two adjacent second announcement packets by the master clock device to a switch device, where the second announcement packet includes capability indication information of the master clock device. In this way, more solutions for monitoring the working status of the master clock device can be provided.

In a possible implementation, that the slave clock device sends first indication information includes one of the following content: The slave clock device sends a second announcement packet, where the second announcement packet includes capability indication information of the slave clock device and the first indication information. The slave clock device sends a second synchronization packet, where the second synchronization packet includes the time information of the slave clock device and the first indication information. The slave clock device sends a preset bit sequence, where the preset bit sequence includes the first indication information. The slave clock device sends preset frame encapsulation signaling, where the preset frame encapsulation signaling includes the first indication information. In this way, more solutions for sending the first indication information can be provided.

According to a second aspect, a clock switching method is provided, including: A first communications device receives first indication information sent by a slave clock device, where the first indication information indicates to synchronize with a system clock based on time information of the slave clock device. The first communications device obtains the time information of the slave clock device. The first communications device synchronizes with the system clock of the first communications device based on the time information of the slave clock device. This process may save time consumed for executing a BMCA used to determine a best master clock device. In addition, the slave clock sends the first indication information after discovering that the master clock device is faulty, and duration for this part is mainly duration consumed for exchanging command data in a system, is at a level of ns, and may be ignored. Therefore, compared with a solution in the conventional technology in which a best master clock device is calculated by sending an announcement packet and executing a BMCA, the solution in embodiments of this application can greatly shorten clock switching duration.

In a possible implementation, duration between a moment for most recently receiving, by the first communications device, a first synchronization packet sent by a master clock device and a moment for receiving the first indication information by the first communications device is less than duration between moments for receiving two adjacent first synchronization packets. Alternatively, duration between a moment for most recently receiving, by the first communications device, a first announcement packet sent by a master clock device and a moment for receiving the first indication information by the first communications device is less than duration between moments for receiving two adjacent first announcement packets. Alternatively, duration between a moment for most recently receiving, by the first communications device, a first synchronization packet sent by a master clock device and a moment for receiving the first indication information by the first communications device is less than third duration, where the third duration is a smaller value in duration between moments for receiving two adjacent first synchronization packets and duration between moments for receiving two adjacent first announcement packets. Alternatively, duration between a moment for most recently receiving, by the first communications device, a first announcement packet sent by a master clock device and a moment for receiving the first indication information by the first communications device is less than third duration, where the third duration is a smaller value in duration between moments for receiving two adjacent first synchronization packets and duration between moments for receiving two adjacent first announcement packets.

In a possible implementation, that a first communications device receives first indication information includes one of the following content: The first communications device obtains the first indication information based on a received second announcement packet sent by the slave clock device, where the second announcement packet includes capability indication information of the slave clock device and the first indication information. Alternatively, the first communications device obtains the first indication information based on a received second synchronization packet sent by the slave clock device, where the second synchronization packet includes the time information of the slave clock device and the first indication information. Alternatively, the first communications device obtains the first indication information based on a received preset bit sequence sent by the slave clock device, where the preset bit sequence includes the first indication information. Alternatively, the first communications device obtains the first indication information based on received preset frame encapsulation signaling sent by the slave clock device, where the preset frame encapsulation signaling includes the first indication information. In this way, more solutions for monitoring the working status of the master clock device can be provided.

In a possible implementation, that the first communications device obtains the time information of the slave clock device includes: The first communications device determines the time information of the slave clock device from pre-maintained time information of the slave clock device. In an optional implementation, the first communications device may pre-maintain a plurality of pieces of time information of the slave clock device. When the first communications device needs to be used, the first communications device may use most recent time information of the slave clock device, that is, the latest time information of the slave clock device in the maintained time information of the slave clock device.

In a possible implementation, that the first communications device obtains the time information of the slave clock device includes: The first communications device receives the second synchronization packet sent by the slave clock device, where the second synchronization packet includes the time information of the slave clock device.

In a possible implementation, after the first communications device receives the first indication information, the method further includes: The first communications device sends the first indication information to another node. In this way, the another node can perform synchronization on the system clock.

According to a third aspect, an embodiment of this application provides a clock switching method, including: A master clock device sends second indication information to a slave clock device based on a working status of the master clock device, where the second indication information indicates the working status of the master clock device. In this way, the slave clock device can monitor the working status of the master clock device.

In a possible implementation, that a master clock device sends second indication information to a slave clock device based on a working status of the master clock device includes: if the master clock device is in a normal working state, outputting a first level signal over a link connected to the slave clock device, or if the master clock device is in a faulty state, outputting a second level signal over a link connected to the slave clock device.

In a possible implementation, that a master clock device sends second indication information to a slave clock device based on a working status of the master clock device includes: if the master clock device is in a normal working state, outputting a signal over a link connected to the slave clock device, where the signal is an electrical signal or an optical signal; or if the master clock device is in a faulty state, stopping sending a signal over a link connected to the slave clock device.

In a possible implementation, that a master clock device sends second indication information to a slave clock device based on a working status of the master clock device includes: if the master clock device is in a normal working state, periodically sending a first message to the slave clock device by using first duration as a periodicity. The first duration meets one of the following content: The first message is different from a first synchronization packet, and the first duration is less than duration between moments for sending two adjacent first synchronization packets by the master clock device to the slave clock device, where the first synchronization packet includes time information of the master clock device. Alternatively, the first message is different from a first announcement packet, and the first duration is less than duration between moments for sending two adjacent first announcement packets by the master clock device to the slave clock device, where the first announcement packet includes capability indication information of the master clock device. Alternatively, the first message is different from a first synchronization packet, the first message is different from a first announcement packet, and the first duration is less than third duration, where the third duration is a smaller value in duration between moments for sending two adjacent first synchronization packets by the master clock device to the slave clock device and duration between moments for sending two adjacent first announcement packets by the master clock device to the slave clock device. Alternatively, the first message is a first synchronization packet, and the first duration is less than duration between moments for sending two adjacent second synchronization packets by the master clock device to a switch device, where the second synchronization packet includes time information of the master clock device. Alternatively, the first message is a first announcement packet, and the first duration is less than duration between moments for sending two adjacent second announcement packets by the master clock device to a switch device, where the second announcement packet includes capability indication information of the master clock device.

Corresponding to any communication method in the first aspect to the third aspect, this application further provides a communications device. The communications device may be any transmit end device or any receive end device that transmits data wirelessly, for example, a communications chip or a network device. In a communication process, a transmit end device and a receive end device are relative. In some communication processes, the communications device may be used as the slave clock device, the master clock device, or the first communications device described above, or may be used as a communications chip used in the slave clock device, the master clock device, or the first communications device.

According to a fourth aspect, a communications device is provided, including a transceiver unit and a processing unit, to perform any implementation of any communication method in the first aspect to the third aspect. The transceiver unit is configured to perform functions related to sending and receiving. Optionally, the transceiver unit includes a receiving unit and a sending unit. In a design, the communications device is a communications chip, and the transceiver unit may be an input/output circuit or a port of the communications chip.

In another design, the transceiver unit may be a transmitter and a receiver, or may be a transmitter machine and a receiver machine.

Optionally, the communications device further includes modules that may be configured to perform any implementation of any communication method in the first aspect to the third aspect.

According to a fifth aspect, a communications device is provided. The communications device is the slave clock device, the master clock device, or the first communications device described above. The communications device includes a processor and a memory. Optionally, the communications device further includes a transceiver. The memory is configured to store a computer program or instructions. The processor is configured to invoke the computer program or the instructions from the memory and run the computer program or the instructions. When the processor executes the computer program or the instructions in the memory, the communications device is enabled to perform any implementation of any communication method in the first aspect to the third aspect.

Optionally, there are one or more processors and one or more memories.

Optionally, the memory may be integrated into the processor, or the memory and the processor are disposed separately.

Optionally, the transceiver may include a transmitter (transmitter machine) and a receiver (receiver machine).

According to a sixth aspect, a communications device is provided, including a processor. The processor is coupled to a memory, and may be configured to perform the method in any one of the first aspect to the third aspect or the possible implementations of the first aspect to the third aspect. Optionally, the communications device further includes the memory. Optionally, the communications device further includes a communications interface, and the processor is coupled to the communications interface.

In another implementation, the communications device is a slave clock device, a master clock device, or a first communications device. When the communications device is the slave clock device, the master clock device, or the first communications device, the communications interface may be a transceiver or an input/output interface. Optionally, the transceiver may be a transceiver circuit. Optionally, the input/output interface may be an input/output circuit.

In another implementation, the communication device is a chip or a chip system. When the communications device is a chip or a chip system, the communications interface may be an input/output interface, an interface circuit, an output circuit, an input circuit, a pin, a related circuit, or the like on the chip or the chip system. The processor may alternatively be embodied as a processing circuit or a logic circuit.

According to a seventh aspect, a system is provided. The system includes the slave clock device, the master clock device, or the first communications device described above.

According to an eighth aspect, a computer program product is provided. The computer program product includes a computer program (which may also be referred to as code or instructions). When the computer program is run, a computer is enabled to perform the method in any possible implementation of the first aspect, or the method in any implementation of the first aspect to the third aspect.

According to a ninth aspect, a computer-readable storage medium is provided. The computer-readable storage medium stores a computer program (which may also be referred to as code or instructions). When the computer program is run on a computer, the computer is enabled to perform the method in any possible implementation of the first aspect, or the method in any implementation of the first aspect to the third aspect.

According to a tenth aspect, a processing device is provided, including an input circuit, an output circuit, and a processing circuit. The processing circuit is configured to: receive a signal by using the input circuit, and transmit a signal by using the output circuit, so that the method in any one of the first aspect to the third aspect or the possible implementations of the first aspect to the third aspect is implemented.

In a specific implementation process, the processing device may be a chip, the input circuit may be an input pin, the output circuit may be an output pin, and the processing circuit may be a transistor, a gate circuit, a trigger, various logic circuits, or the like. An input signal received by the input circuit may be received and input by, for example but not limited to, a receiver, a signal output by the output circuit may be output to, for example but not limited to, a transmitter and transmitted by the transmitter, and the input circuit and the output circuit may be a same circuit. The circuit is used as the input circuit and the output circuit at different moments. Specific implementations of the processor and the various circuits are not limited in embodiments of this application.

### BRIEF DESCRIPTION OF DRAWINGS

FIG. 1 is a schematic diagram of a system architecture to which an embodiment of this application is applicable;
FIG. 2 is a schematic diagram of another network architecture to which an embodiment of this application is applicable;
FIG. 3 is a schematic flowchart of a clock switching method;
FIG. 4 is a schematic flowchart of a clock switching method according to an embodiment of this application;
FIG. 5 is a schematic diagram of a structure of a communications device;
FIG. 6 is a schematic diagram of a structure of another communications device; and
FIG. 7 is a schematic diagram of a structure of another communications device.

### DESCRIPTION OF EMBODIMENTS

Embodiments of this application are applicable to a plurality of networks that have a clock synchronization requirement, for example, an in-vehicle network and a 5G network. The in-vehicle network is used as an example. The in-vehicle network in embodiment of this application may include one or more of the following network elements:
Sensor: The sensor may include, for example, an on-board sensor such as a millimeter-wave radar, a laser radar, an ultrasonic radar, a camera, a positioning system (such as a GPS), an inertial measurement unit (Inertial measurement unit, IMU), a speed sensor, an acceleration sensor, a humidity sensor, or a light intensity sensor, and sensor information transmitted by an in-vehicle T-Box (Telematics BOX).

Play device: The play device may include, for example, a display, a speaker, and a power amplifier.

Switch device: The switch device may be configured to perform a route switching function, may be a switch or a router, and may be configured to aggregate and relay various data services, such as audio and videos, synchronization messages, and control messages.

Controller: The controller may be a computing center, may be configured to perform calculation and control functions, and may be independent of or integrated into a gateway, for example, may be specifically an in-vehicle computing platform or an in-vehicle computer, a domain controller, or a multi-domain controller, such as an automatic driving controller or an infotainment controller, or may be a storage center or a data center, configured to store important data, such as a black box or a dashboard camera in a vehicle.

The foregoing network elements are only logical concepts of the in-vehicle network. Actually, the foregoing network elements each may be a physical device or a box, or may be a board or a function implemented by a chip or an area on the board. Actually, a plurality of network elements may be combined into one device. For example, a switch device and a controller may be on one circuit board.

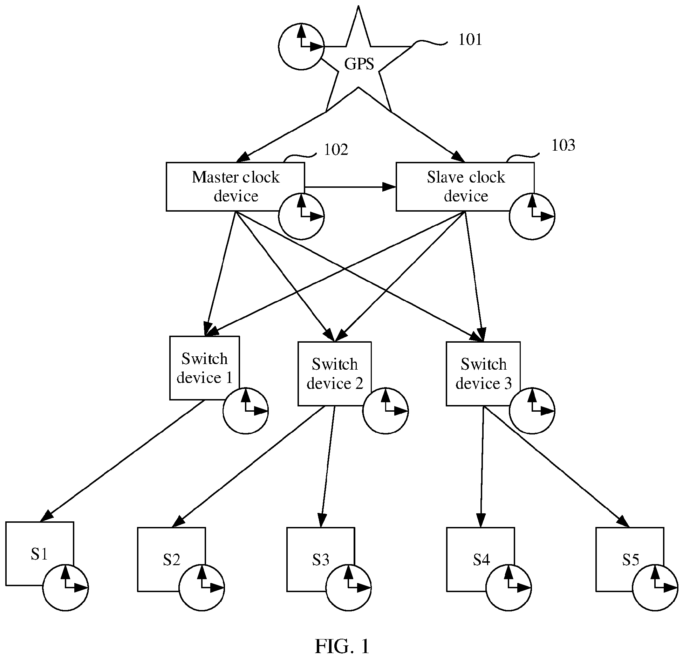

To ensure robustness of a system, a master clock device and a slave clock device are configured on a network. In embodiments of this application, the master clock device and the slave clock device are randomly distributed physically, and may be in different boxes or a same box, or may be on a same circuit board. Each node on the network keeps time synchronization with the master clock device in a normal working state. FIG. 1 is an example of a schematic diagram of a system architecture to which an embodiment of this application is applicable. As shown in FIG. 1, nodes in the system include a switch device and an end node (for example, an end node S1 to an end node S5). The nodes may be collectively referred to as a first communications device. The first communications device mentioned in embodiments of this application may be a switch device or an end node. For differentiation, a switch device and an end node device are separately used for identification in FIG. 1.

As shown in FIG. 1, the network includes an external clock signal 101. The external clock signal may be, for example, a global positioning system (Global Positioning System, GPS) or BeiDou. A master clock device 102 and a slave clock device 103 keep time synchronization with the external clock signal. There is a direct physical link between the master clock device 102 and the slave clock device 103. In a normal working state, a switch device 1, a switch device 2, and a switch device 3 keep time synchronization with the master clock device 102, and the end node S1 keeps time synchronization with the master clock device 102 through the switch device 1. The end node S2 keeps time synchronization with the master clock device 102 through the switch device 2. The end node S3 keeps time synchronization with the master clock device 102 through the switch device 3. The end node S4 keeps time synchronization with the master clock device 102 through the switch device 3. The end node S5 keeps time synchronization with the master clock device 102 through the switch device 3. In this way, an operating time and a frequency of the entire network can be aligned, to ensure that system clock precision is within a required range, and drive the network to work in an orderly manner.

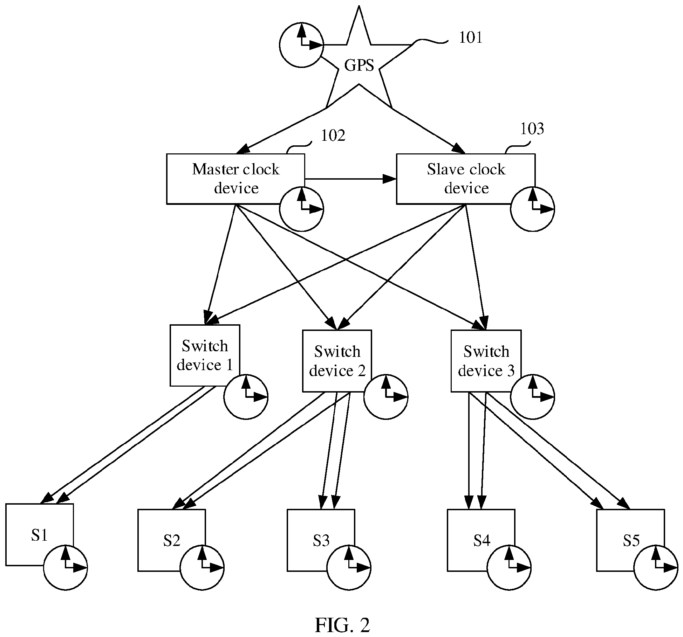

FIG. 2 is an example of a schematic diagram of another network architecture to which an embodiment of this application is applicable. A difference between FIG. 2 and FIG. 1 lies in that all nodes in FIG. 2 (including a switch device 1, a switch device 2, a switch device 3, an end node S1, an end node S2, an end node S3, an end node S4, and an end node S5) each establish a master clock synchronization tree and a slave clock synchronization tree with a master clock and a slave clock respectively. In a normal working state, each node keeps clock synchronization with the master clock device, but each node also maintains time information of the slave clock device. That is, a delay and a frequency between nodes in the slave clock synchronization tree are always measured and stored. When each node detects that the master clock device is faulty, a system may directly switch from the master clock synchronization tree to the slave clock synchronization tree, to implement clock switching. The switch device 1 may be separately connected to the master clock device 102 and the slave clock device 103 through two interfaces. When it is determined that the master clock device 102 is faulty, time information sent by the slave clock device 103 is received through the interface connected to the slave clock device 103. The end node S1 is used as an example to describe a solution of an end node. The end node S1 is separately connected to the switch device 1 through two interfaces. When the master clock device 102 is in a normal working state, the end node S1 implements time synchronization with the master clock device 102 through one of the interfaces, and receives time information of the slave clock device 103 through the other interface, and stores the time information. When the end node S1 determines that the master clock device 102 is faulty, the end node S1 performs clock synchronization by using the time information of the slave clock device 103 that is received through the other interface, to implement switching from the master clock synchronization tree to the slave clock synchronization tree.

The master clock device and the slave clock device in the system are preconfigured. For example, a best master clock in the system may be determined according to a BMCA, and the best master clock is used as the current master clock device. In an optional implementation, the BMCA may be a best master clock algorithm proposed in the 802.1AS or 802.1AS REV protocol. In this algorithm, the best master clock in the system is determined by comparing capabilities of all the nodes.

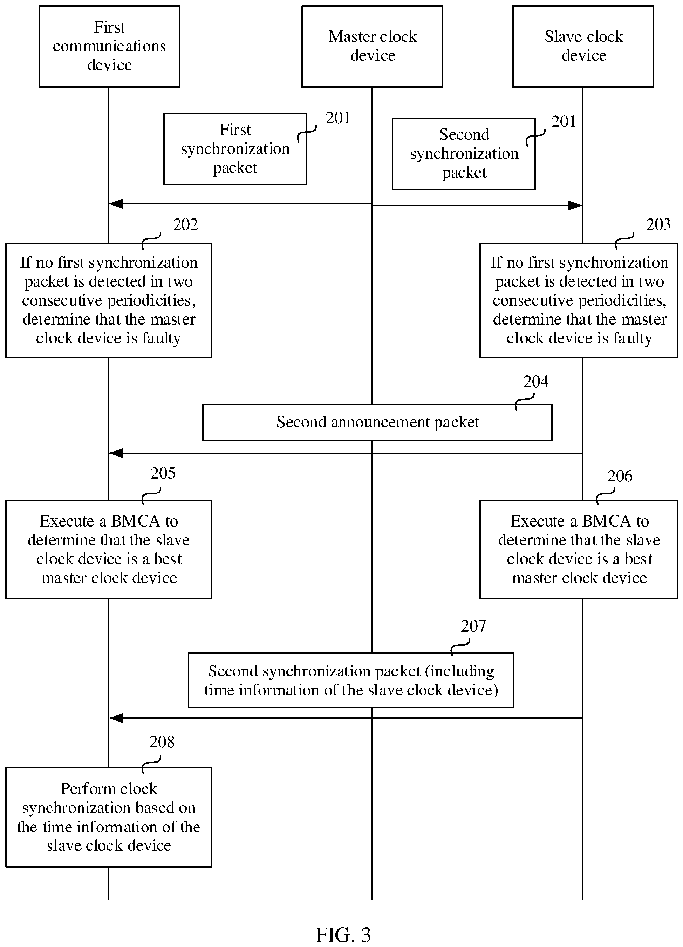

During specific implementation, factors that affect a time synchronization error include: a physical layer asymmetric delay, a crystal oscillator working frequency, and crystal oscillator frequency precision. The first two factors are determined by inherent characteristics of the system, and the third factor affects the error together with unsynchronized clock duration. In embodiments of this application, the crystal oscillator frequency precision may be mainly considered. The following analyzes a disadvantage in a possible clock switching process by using a schematic flowchart of a clock switching method shown in FIG. 3. As shown in FIG. 3, the method includes the following steps.

Step 201: A master clock device periodically sends a first synchronization packet. The first synchronization packet includes time information of the master clock device.

Step 202: When detecting no first synchronization packet in two consecutive periodicities, a first communications device determines that the master clock device is faulty.

Step 203: When detecting no first synchronization packet in two consecutive periodicities, a slave clock device determines that the master clock device is faulty.

Step 204: The slave clock device sends a second announcement packet, where the second announcement packet carries capability indication information of the slave clock device.

A first communications device of another node also sends capability indication information of the first communications device. Each node executes a BMCA to determine a best master clock device, for example, in step 205 and step 206.

Step 205: The first communications device executes a BMCA to determine that the slave clock device is a best master clock device.

Step 206: The slave clock device executes a BMCA to determine that the slave clock device is a best master clock device.

Step 207: The slave clock device sends a second synchronization packet, where the second synchronization packet includes time information of the slave clock device.

Step 208: The first communications device performs clock synchronization based on the time information of the slave clock device.

In step 208, after it is determined that the slave clock device is the best master clock device, the slave clock device changes into the master clock device. In other words, identities of the master clock device and the slave clock device in embodiments of this application may change. When a clock is set as the slave clock device at the beginning and then selected as the best master clock device, an identity of the clock changes into the master clock device.

Analysis is performed based on the method shown in FIG. 3. As shown in FIG. 3, clock switching duration mainly includes: duration for the first communications device to detect that the master clock device is faulty (sending periodicities (Ts) of two first synchronization packets in FIG. 3), and duration for establishing synchronization between the first communications device and the slave clock device (a sending periodicity (Ta) of one second announcement packet and a sending periodicity of one second synchronization packet in FIG. 3). It is assumed that sending frequencies of the first synchronization packet, the second synchronization packet, and the first announcement packet are all 100 milliseconds (ms), and crystal oscillator frequency precision of the first communications device is 200 ppm (one millionth (ppm): which represents crystal oscillator frequency precision). In this case, total clock switching duration is 400 ms. Therefore, a system time synchronization error caused by this process is 0.4^{∗}200, that is, 80 µs. Currently, many systems have high requirements on time synchronization precision. For example, TD-SCDMA and LTE TDD requires time synchronization of ±1.5 µs, and CDMA2000 requires time synchronization of ±3 µs. An in-vehicle communications network also has a high requirement on time synchronization precision. A time synchronization precision error in the solution described in FIG. 3 is relatively large, and cannot meet a requirement of system synchronization precision.

According to the analysis, there are two main reasons for a large time synchronization precision error in a clock switching process: first crystal oscillator frequency precision, which depends on selection of a crystal oscillator with higher precision, and excessively long duration for the first communications device to detect that the slave clock device is faulty and excessively long duration for establishing synchronization between the first communications device and the slave clock device. Therefore, the clock switching method provided in embodiments of this application shortens clock switching duration, so as to reduce a time synchronization error in a switching process.

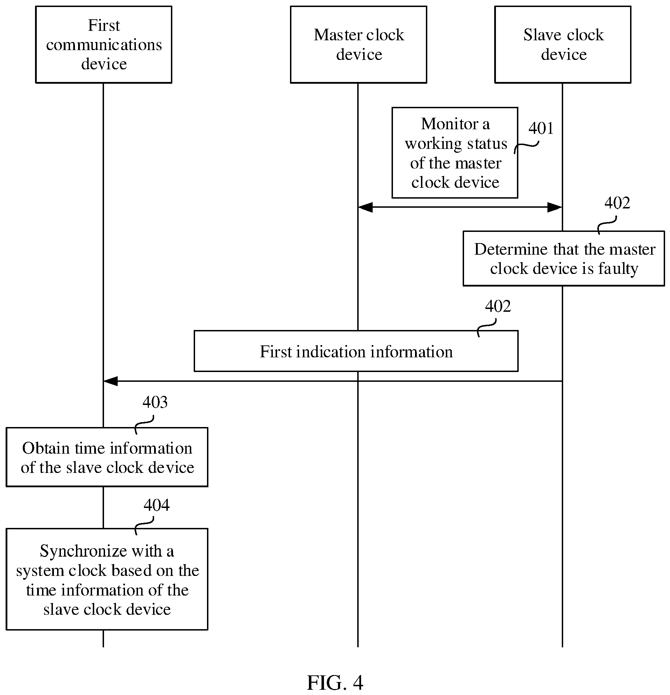

FIG. 4 shows an example of a clock switching method according to an embodiment of this application. The method includes the following steps.

Step 401: A slave clock device monitors a working status of a master clock device, where the working status includes a normal working state or a faulty state.

Step 402: When the slave clock device determines that the master clock device is in the faulty state, the slave clock device sends first indication information, where the first indication information indicates to synchronize with a system clock based on time information of the slave clock device.

Correspondingly, a first communications device receives the first indication information sent by the slave clock device, where the first indication information indicates to synchronize with the system clock based on the time information of the slave clock device.

After step 402, step 403 performed on the first communications device side may be further included.

Step 403: The first communications device obtains the time information of the slave clock device.

Step 404: The first communications device synchronizes with the system clock of the first communications device based on the time information of the slave clock device.

Step 404 may also be described as follows: The first communications device switches a system clock device to the slave clock device. Specifically, the first communications device has two interfaces. One interface receives time information of the master clock device, and the other interface receives the time information of the slave clock device. Optionally, that the first communications device synchronizes with the system clock of the first communications device based on the time information of the slave clock device may also be described as follows: The first communications device enables an interface for receiving the time information of the slave clock device. Alternatively, the first communications device switches to an interface for receiving the time information of the slave clock device.

The first communications device on a network performs clock device switching. Optionally, an identity of a clock device that is used as the slave clock device is updated to the master clock device. Because a clock device that is originally used as the master clock device is faulty, an identity of the clock device is updated to a non-master clock device. That is, an identity of a clock device in a system may change with current system performance. For example, the clock device may be initially used as a master clock device, but after a fault occurs, the identity of the clock device is changed into a non-master clock device. For another example, the clock device is initially used as a slave clock device, but after a master device is faulty, the identity of the clock device is updated to the master clock device. In embodiments of this application, the slave clock device in step 401 is a clock device whose identity is used as the slave clock device, and the master clock device is a clock device whose identity is used as the master clock device.

In embodiments of this application, the slave clock device may monitor the working status of the master clock device, and sends the first indication information when discovering that the master clock device is in the faulty state, so that a first communications device synchronizes with a system clock of the first communications device based on the time information of the slave clock device. This process may save time consumed for executing a BMCA used to determine a best master clock device. In addition, the slave clock sends the first indication information after discovering that the master clock device is faulty, and duration for this part is mainly duration consumed for exchanging command data in a system, is at a level of ns, and may be ignored. Therefore, compared with a solution in the conventional technology in which a best master clock device is calculated by sending an announcement packet and executing a BMCA, the solution in embodiments of this application can greatly shorten clock switching duration.

Moreover, because the slave clock device detects the working status of the master clock device, a clock switching process may be shortened by shortening duration for the slave clock to discover that the master clock device is faulty. This further increases a clock switching speed, further reduces an offset of a system clock of each first communications device, and improves robustness of system time synchronization and system operation reliability.

In step 401, there is a link between the master clock device and the slave clock device, and the link may transmit information such as a synchronization packet or an announcement packet. The synchronization packet may be written as a sync packet, and the announcement packet may be written as an announce packet. The slave clock device may monitor the working status of the master clock device over the original link. Optionally, a new link may be added between the slave clock device and the master clock device to monitor the working status of the master clock device. The new link may be a copper line, a printed circuit board (Printed Circuit Board, PCB) cabling, an optical fiber, or the like.

In step 401, in an optional implementation, the slave clock device continuously monitors the working status of the master clock device. Continuous monitoring means that the slave clock device receives a persistent signal (such as an optical signal or an electrical signal) to determine the working status of the master clock device. In another optional implementation, the slave clock device periodically monitors the working status of the master clock device. Periodic monitoring means that the working status of the master clock device is periodically determined at a specific time interval.

In step 401, the master clock device may send second indication information to the slave clock device based on the working status of the master clock device. The second indication information indicates the working status of the master clock device. Optionally, a link is connected between the master clock device and the slave clock device. The link may be a cable that can output an electrical signal, or may be an optical cable that can output an optical signal, or may be another transmission medium. This is not limited in this application. In an optional implementation, the master clock device sends a signal to the slave clock device in both the normal working state and the faulty state. In still another optional implementation, the master clock device may send a signal to the slave clock device only in the faulty state, that is, the master clock device may not send a signal in the normal working state. In still another optional implementation, the master clock device may send a signal to the slave clock device only in the normal working state, that is, the master clock device may not send a signal in the faulty state. The following uses a solution a1, a solution a2, and a solution a3 for illustration.

### Solution a1

In the solution a1, the second indication information may include third indication information and fourth indication information. The third indication information indicates that the master clock device is in the normal working state, and the fourth indication information indicates that the master clock device is in the faulty state.

The second indication information may be periodically sent, or may be continuously sent. For example, when being in the normal working state, the master clock device may periodically or continuously send the third indication information to the slave clock device. When being in the faulty state, the master clock device may periodically or continuously send the fourth indication information to the slave clock device. When receiving the fourth indication information, the slave clock device determines that the master clock device is in the faulty state.

In an optional implementation of the solution a1, the master clock device may continuously send an electrical signal to the slave clock device based on the working status of the master clock device, and may indicate the working status of the master clock device by using a high level and a low level of the electrical signal. For example, the electrical signal includes a first level signal and a second level signal. The first level signal in the electrical signal is used to indicate that the master clock device is in the working state, and the second level signal in the electrical signal is used to indicate that the master clock device is in the faulty state. If the first level signal is a high level, the second level signal is a low level. If the first level signal is a low level, the second level signal is a high level.

In another optional implementation of the solution a1, if the master clock device is in the normal working state, the master clock device outputs the first level signal over a link connected to the slave clock device (the link may be, for example, a cable or another link capable of outputting the electrical signal). If the master clock device is in the faulty state, the master clock device outputs the second level signal over the link connected to the slave clock device. For example, hardware is improved, so that the master clock device can continuously or periodically send the high level in the normal working state. To be specific, in the solution a1, if the master clock device is in the normal working state, the high level is continuously or periodically transmitted on the link. When the master clock device is in the faulty state, because the master clock device is faulty, if a level of the electrical signal on the link is pulled down, the low level is output on the link. For another example, software of the master clock device is improved, so that the master clock device can continuously send the high level in the normal working state. However, when the master clock device is in the faulty state, the master clock device may actively pull down a level of the electrical signal, so that the low level is output on the link. Correspondingly, if the electrical signal received by the slave clock device over the link is the second level signal, the slave clock device determines that the master clock device is in the faulty state. Optionally, if the electrical signal received by the slave clock device over the link is the first level signal, the slave clock device determines that the master clock device is in the working state.

### Solution a2

In the solution a2, when being in the faulty state, the master clock device may send fourth indication information. The fourth indication information indicates that the master clock device is in the faulty state. That is, when being in the normal working state, the master clock device may send no signal used to indicate that the master clock device is in the normal working state. In the solution a2, the fourth indication information may be an optical signal, an electrical signal, preset signaling, or the like.

### Solution a3

In the solution a3, if the master clock device is in the normal working state, the master clock device continuously outputs third indication information over a link connected to the slave clock device, or periodically outputs third indication information by using first duration as a periodicity. The third indication information indicates that the master clock device is in the normal working state. If the master clock device is in the faulty state, the master clock device stops periodically outputting the third indication information over the link connected to the slave clock device. That is, when being in the faulty state, the master clock device may send no signal used to indicate that the master clock device is in the faulty state. Correspondingly, the slave clock device periodically monitors the working status of the master clock device by using the third indication information that is output over the link connected to the master clock device. In the solution a3, the third indication information may be an optical signal, a first message, an electrical signal, or the like. The electrical signal is implemented in a plurality of forms, for example, may be a high level, a low level, or an electrical signal including a high level and a low level.

In an optional implementation of the solution a3, if the master clock device is in the normal working state, the master clock device continuously outputs the third indication information over the link connected to the slave clock device. If the master clock device is in the faulty state, the master clock device stops outputting the third indication information over the link connected to the slave clock device. Correspondingly, the slave clock device continuously monitors the working status of the master clock device by using the third indication information that is output over the link connected to the master clock device. To be specific, in the solution a3, if the master clock device is in the normal working state, the third indication information is continuously transmitted on the link. If the slave clock device does not receive the third indication information over the link (that is, there is no third indication information on the link), the slave clock device determines that the master clock device is in the faulty state. In an optional implementation, if the slave clock device does not receive the signal over the link within second duration, the slave clock device determines that the master clock device is in the faulty state. The third indication information transmitted on the link indicates that the master clock device is in the normal working state.

In another optional implementation of the solution a3, the slave clock device monitors the working status of the master clock device in a manner of periodically receiving the third indication information by using the first duration as the periodicity. The third indication information is periodically sent by the master clock device to the slave clock device in the normal working state by using the first duration as the periodicity. In the solution a3, correspondingly, if the slave clock device does not successfully receive a next piece of third indication information within second duration after the slave clock device most recently receives the third indication information, the slave clock device determines that the master clock device is in the faulty state. That is, if the slave clock device discards one piece of third indication information or fails to receive one first message, the slave clock device may determine that the master clock device is in the faulty state.

Optionally, the second duration may include the first duration and first preset duration.

In the solution a3, when the third indication information is the first message, the first message may be existing signaling, for example, a synchronization packet or an announcement packet sent by the master clock device, or may be other newly added signaling used to indicate that the master clock device is in the working state. The first duration in the solution a3 may also be implemented in a plurality of forms. The following illustrates various implementations of the solution a3 by using the following solution b1, solution b2, solution b3, solution b4, and solution b5.

### Solution b1

In embodiments of this application, a synchronization packet sent by the master clock device is referred to as a first synchronization packet, and the master clock device may send the first synchronization packet to the slave clock device or another device such as a switch device. The first synchronization packet includes time information of the master clock device. In embodiments of this application, a synchronization packet sent by the slave clock device is referred to as a second synchronization packet, and the slave clock device may send the second synchronization packet to another device such as a switch device. The second synchronization packet includes the time information of the slave clock device.

In the solution b1, the first duration is less than duration between moments for sending two adjacent first synchronization packets by the master clock device to the switch device. That is, the first duration is less than a sending periodicity in which the master clock device sends the first synchronization packet to the switch device. In this way, only a frequency at which the master clock device sends the first synchronization packet to the slave clock device may be adjusted, so that a frequency at which the master clock device sends a synchronization packet to the slave clock device is higher than a frequency at which the master clock device sends a synchronization packet to the switch device. Compared with a solution in which the switch device needs to determine, when two consecutive first synchronization packets are lost, that the master clock device is faulty, this solution can enable the slave clock device to discover, more quickly than the switch device, that the master clock device is faulty. In this solution, a solution in which once one first synchronization packet is lost, it is determined that the master clock device is faulty may be used. This solution may also be compatible with the conventional technology. When two consecutive first synchronization packets are lost, it is determined that the master clock device is faulty.

Optionally, in the solution b1, the first message may be the first synchronization packet.

### Solution b2

In embodiments of this application, an announcement packet sent by the master clock device is referred to as a first announcement packet, and the master clock device may send the first announcement packet to the slave clock device or another device such as a switch device. The first announcement packet includes capability indication information of the master clock device. In embodiments of this application, an announcement packet sent by the slave clock device is referred to as a second announcement packet, and the slave clock device may send the second announcement packet to another device such as a switch device. The second announcement packet includes capability indication information of the slave clock device.

In the solution b2, the first duration is less than duration between moments for sending two adjacent first announcement packets by the master clock device to the switch device. That is, the first duration is less than a sending periodicity in which the master clock device sends the first announcement packet to the switch device. In this way, only a frequency at which the master clock device sends the first announcement packet to the slave clock device may be adjusted, so that a frequency at which the master clock device sends an announcement packet to the slave clock device is higher than a frequency at which the master clock device sends an announcement packet to the switch device. Compared with a solution in which the switch device determines, when two consecutive first announcement packets are lost, that the master clock device is faulty, this solution can enable the slave clock device to discover, more quickly than the switch device, that the master clock device is faulty. In this solution, a solution in which once one first announcement packet is lost, it is determined that the master clock device is faulty may be used. This solution may also be compatible with the conventional technology. When two consecutive first announcement packets are lost, it is determined that the master clock device is faulty.

Optionally, in the solution b2, the first message may be the first announcement packet.

### Solution b3

In the solution b3, the first duration is less than duration between moments for sending two adjacent first synchronization packets by the master clock device to the slave clock device. That is, the first duration is less than a sending periodicity in which the master clock device sends the first synchronization packet to the switch device. In this way, a frequency of the first message is higher than a frequency at which the master clock device sends the first synchronization packet to the slave clock device. Compared with a solution in which the slave clock device determines, when two consecutive first synchronization packets are lost, that the master clock device is faulty, this solution can increase a speed at which the slave clock device discovers the master clock device, and further shorten a time consumed in a clock switching process.

Optionally, the first message in the solution a3 is different from the first synchronization packet. Optionally, the first message may be the same as or different from a first announcement packet.

### Solution b4

In the solution b4, the first duration is less than duration between moments for sending two adjacent first announcement packets by the master clock device to the slave clock device. That is, the first duration is less than a sending periodicity in which the master clock device sends the first announcement packet to the switch device. In this way, a frequency of the first message is higher than a frequency at which the master clock device sends the first announcement packet to the slave clock device. Compared with a solution in which the slave clock device determines, when two consecutive first announcement packets are lost, that the master clock device is faulty, this solution can increase a speed at which the slave clock device discovers the master clock device, and further shorten a time consumed in a clock switching process.

Optionally, the first message in the solution a3 is different from the first announcement packet. Optionally, the first message may be the same as or different from a first synchronization packet.

### Solution b5

In the solution b5, the first duration is less than third duration, where the third duration is a smaller value in duration between moments for sending two adjacent first synchronization packets by the master clock device to the slave clock device and duration between moments for sending two adjacent first announcement packets by the master clock device to the slave clock device. That is, the third duration is a smaller value in a sending periodicity in which the master clock device sends the first synchronization packet to the slave clock device and a sending periodicity in which the master clock device sends the first announcement packet to the slave clock device. In this way, a frequency of the first message is higher than both a frequency at which the master clock device sends the first announcement packet to the slave clock device, and a frequency at which the master clock device sends the first synchronization packet to the slave clock device. Compared with a solution in which the slave clock device determines, when two consecutive first announcement packets are lost, that the master clock device is faulty, this solution can increase a speed at which the slave clock device discovers the master clock device, and further shorten a time consumed in a clock switching process.

Optionally, the first message in the solution a3 is different from the first synchronization packet, and the first message is different from the first announcement packet.

In the solution b1 to the solution b5, the first duration may be replaced with the second duration. That is, a sum of the first duration and the first preset duration may be less than a specific value.

Step 403 may further include a possible implementation. When determining that the master clock device is in the faulty state, the slave clock device sends the first indication information. In a possible implementation, duration between a moment for most recently receiving, by the first communications device, the first synchronization packet sent by the master clock device and a moment for receiving the first indication information is less than duration between moments for receiving two adjacent first synchronization packets, that is, less than a sending periodicity in which the master clock device sends the first synchronization packet to the first communications device. In this way, compared with a solution in which the first communications device can determine, only after two consecutive first synchronization packets are lost, that the master clock device is faulty, this solution can enable the first communications device to discover more quickly that the master clock device is faulty, and further speed up a clock switching process.

In a second possible implementation, duration between a moment for most recently receiving, by the first communications device, the first synchronization packet sent by the master clock device and a moment for receiving the first indication information is less than third duration. In this way, compared with a solution in which the first communications device can determine, only after two consecutive first synchronization packets or two consecutive first announcement packets are lost, that the master clock device is faulty, this solution can enable the first communications device to discover more quickly that the master clock device is faulty, and further speed up a clock switching process.

In a third possible implementation, duration between a moment for most recently receiving, by the first communications device, the first announcement packet sent by the master clock device and a moment for receiving the first indication information is less than duration between moments for receiving two adjacent first announcement packets, that is, less than a sending periodicity in which the master clock device sends the first announcement packet to the first communications device. In this way, compared with a solution in which the first communications device can determine, only after two consecutive first announcement packets are lost, that the master clock device is faulty, this solution can enable the first communications device to discover more quickly that the master clock device is faulty, and further speed up a clock switching process.

In a fourth possible implementation, duration between a moment for most recently receiving, by the first communications device, the first announcement packet sent by the master clock device and a moment for receiving the first indication information is less than third duration. In this way, compared with a solution in which the first communications device can determine, only after two consecutive first synchronization packets or two consecutive first announcement packets are lost, that the master clock device is faulty, this solution can enable the first communications device to discover more quickly that the master clock device is faulty, and further speed up a clock switching process.

In step 402, the slave clock sends the first indication information in a plurality of manners. The slave clock device may explicitly send the first indication information (for example, send one piece of first indication information independently), or may implicitly send the first indication information (for example, add the first indication information to other signaling for sending). A manner of sending the first indication information is illustrated below by using a manner c1, a manner c2, a manner c3, and a manner c4.

### Solution c1

The slave clock device sends a second announcement packet. Correspondingly, the first communications device obtains the first indication information based on the received second announcement packet sent by the slave clock device. The second announcement packet includes capability indication information of the slave clock device and the first indication information. Optionally, the first indication information may be carried in a reserved field of the second announcement packet. In this way, the first indication information may be carried in the existing second announcement packet. This is compatible with the conventional technology, avoids new signaling construction, and can simplify the solution.

### Solution c2

The slave clock device sends a second synchronization packet. Correspondingly, the first communications device obtains the first indication information based on the received second synchronization packet sent by the slave clock device. The second synchronization packet includes the time information of the slave clock device and the first indication information. Optionally, the first indication information may be carried in a reserved field of the second synchronization packet. In this way, the first indication information may be carried in the existing second synchronization packet. This is compatible with the conventional technology, avoids new signaling construction, and can simplify the solution.

### Solution c3

The slave clock device sends a preset bit sequence. Correspondingly, the first communications device obtains the first indication information based on the received preset bit sequence sent by the slave clock device. The preset bit sequence includes the first indication information. To be specific, a preset sequence of 0 and 1 may be sent at an interval between moments for sending the second announcement packet and the second synchronization packet. When receiving the preset sequence of 0 and 1, the first communications device switches to the slave clock device. In this way, the preset bit sequence may be used to indicate the first communications device to perform clock switching. This can simplify the solution.

### Solution c4

The slave clock device sends preset frame encapsulation signaling. Correspondingly, the first communications device obtains the first indication information based on the received preset frame encapsulation signaling sent by the slave clock device. The preset frame encapsulation signaling includes the first indication information. To be specific, the preset frame encapsulation signaling may be sent at an interval between moments for sending the second announcement packet and the second synchronization packet. When receiving the preset frame encapsulation signaling, the first communications device switches to the slave clock device. The preset frame encapsulation signaling may be independent frame encapsulation signaling, for example, may include a frame header and a frame trailer. In this way, the preset frame encapsulation signaling may be used to indicate the first communications device to perform clock switching. This can simplify the solution.

In step 403, the first communications device obtains the time information of the slave clock device in a plurality of manners, which are separately illustrated based on FIG. 1 and FIG. 2.

As shown in FIG. 1, when the first communications device in step 403 is a switch device (for example, the switch device 1 or the switch device 2), the first communications device may receive the second synchronization packet sent by the slave clock device (the second synchronization packet includes the time information of the slave clock device). The slave clock device may send the second synchronization packet after determining that the master clock device is faulty. The second synchronization packet may be sent after the first indication information. Optionally, the second synchronization packet may be sent before the first indication information, or the first indication information is carried in the second synchronization packet for sending. As shown in FIG. 1, optionally, after receiving the first indication information, the switch device forwards the first indication information to another node device, and after receiving the second synchronization packet, the switch device forwards the second synchronization packet to another node device, for example, the end node S1 in FIG. 1. After receiving the second synchronization packet and the first indication information, the end node S1 updates a system clock of the end node S1 based on the time information of the slave clock device.

As shown in FIG. 2, all the nodes (for example, the switch device 1 and the end node S1) maintain time information of the slave clock device. Therefore, when the first communications device in step 403 is a switch device or an end node device, the first communications device determines the time information of the slave clock device from the pre-maintained time information of the slave clock device. In an optional implementation, the first communications device may pre-maintain a plurality of pieces of time information of the slave clock device. When the first communications device needs to be used, the first communications device may use most recent time information of the slave clock device, that is, the latest time information of the slave clock device in the maintained time information of the slave clock device. After the slave clock device sends the first indication information, a slave clock synchronization tree is activated, and all nodes in the slave clock synchronization tree are switched to the slave clock synchronization tree. This may also be described as that all the nodes in the slave clock synchronization tree enable interfaces for receiving the time information of the slave clock device. In this solution, clock switching duration includes: a time at which the slave clock device discovers that the master clock device is faulty, duration for the slave clock device to send the first indication information, a time at which the slave clock synchronization tree is activated, and a time at which the master clock synchronization tree is switched to the slave clock synchronization tree. The time is an internal information processing transfer time, and is at a level of nanosecond ns. If the duration is 1 µs, a synchronization error of this solution is 0.001^{∗}200, that is, 200 ns. Compared with the solution provided in FIG. 3, the effect may be improved by 400 and 200 times.

It should be noted that names of the foregoing messages are merely examples. With evolution of communications technologies, the name of any one of the foregoing messages may change. However, regardless of how the names of the messages change, provided that meanings of the messages are the same as those of the messages in this application, the messages fall within the protection scope of this application.

The foregoing mainly describes the solutions provided in this application from a perspective of interaction between network elements. It may be understood that, to implement the foregoing functions, each network element includes a corresponding hardware structure and/or software module for implementing each function. A person skilled in the art should easily be aware that, in combination with the units and algorithm steps in the examples described in embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

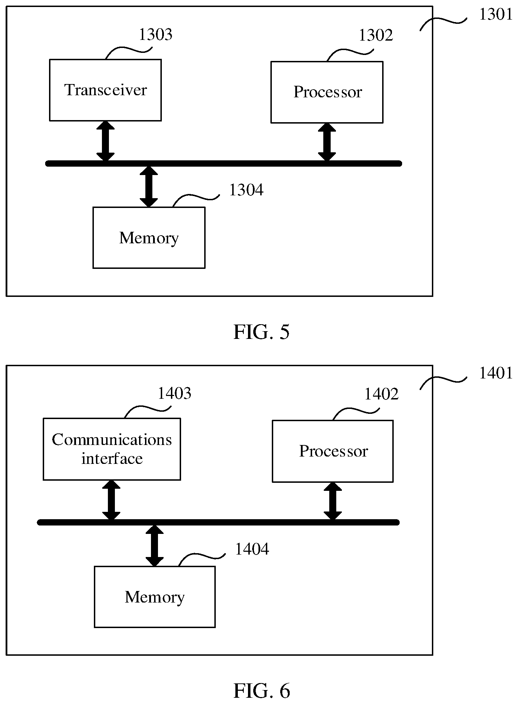

According to the foregoing methods, FIG. 5 is a schematic diagram of a structure of a communications device according to an embodiment of this application. As shown in FIG. 5, the communications device may be a slave clock device, a master clock device, or a first communications device, or may be a chip or a circuit, for example, a chip or a circuit that may be disposed on the slave clock device, or a chip or a circuit that may be disposed on the master clock device, or a chip or a circuit that may be disposed on the first communications device.

Further, the communications device 1301 may further include a bus system. A processor 1302, a memory 1304, and a transceiver 1303 may be connected through the bus system.

It should be understood that the processor 1302 may be a chip. For example, the processor 1302 may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processing circuit (digital signal processor, DSP), a micro controller (micro controller unit, MCU), a programmable logic device (programmable logic device, PLD), or another integrated chip.

In an implementation process, the steps in the foregoing methods may be implemented by using an integrated logic circuit of hardware in the processor 1302, or by using instructions in a form of software. The steps in the methods disclosed with reference to embodiments of this application may be directly performed and completed by a hardware processor, or may be performed and completed by using a combination of hardware and software modules in the processor 1302. The software module may be located in a mature storage medium in the art, such as a random access memory, a flash memory, a read-only memory, a programmable read-only memory, an electrically erasable programmable memory, or a register. The storage medium is located in the memory 1304, and the processor 1302 reads information in the memory 1304 and completes the steps in the foregoing methods in combination with hardware of the processor 1302.

It should be noted that the processor 1302 in embodiments of this application may be an integrated circuit chip, and has a signal processing capability. In an implementation process, the steps in the foregoing method embodiments may be implemented by using an integrated logic circuit of hardware in the processor, or by using instructions in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory 1304 in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

When the communications device 1301 corresponds to the slave clock device in the foregoing methods, the communications device may include a processor 1302, a transceiver 1303, and a memory 1304. The memory 1304 is configured to store instructions. The processor 1302 is configured to execute the instructions stored in the memory 1304, to implement the related solution of the slave clock device in one or more of the corresponding methods shown in FIG. 1 to FIG. 4.

When the communications device 1301 is the slave clock device, in a possible implementation, the processor 1302 is configured to: monitor a working status of a master clock device, where the working status includes a normal working state or a faulty state; and when determining that the master clock device is in the faulty state, send first indication information by using the transceiver 1303, where the first indication information indicates to synchronize with a system clock based on time information of the slave clock device.

When the communications device 1301 is the slave clock device, in a possible implementation, the processor 1302 is specifically configured to continuously or periodically monitor the working status of the master clock device.

When the communications device 1301 is the slave clock device, in a possible implementation, the processor 1302 is specifically configured to: continuously monitor the working status of the master clock device by using a signal that is output over a link connected to the master clock device, where the signal transmitted on the link includes an electrical signal or an optical signal, and the signal transmitted on the link is used to indicate that the master clock device is in the normal working state; and if the signal is not received over the link, determine that the master clock device is in the faulty state.

When the communications device 1301 is the slave clock device, in a possible implementation, the processor 1302 is specifically configured to: continuously monitor the working status of the master clock device by using an electrical signal that is output over a link connected to the master clock device, where the electrical signal includes a first level signal and a second level signal, the first level signal in the electrical signal is used to indicate that the master clock device is in the working state, and the second level signal in the electrical signal is used to indicate that the master clock device is in the faulty state; and if the electrical signal received over the link is the second level signal, determine that the master clock device is in the faulty state.

When the communications device 1301 is the slave clock device, in a possible implementation, the processor 1302 is specifically configured to: monitor the working status of the master clock device in a manner of periodically receiving a first message by using first duration as a periodicity, where the first message is periodically sent by the master clock device to the slave clock device in the normal working state by using the first duration as the periodicity; and if a next first message is not successfully received within second duration after the first message is most recently received, determine that the master clock device is in the faulty state, where the second duration includes the first duration and first preset duration. In an optional implementation, a length of the second duration may be a length of the first duration. In this case, a time length of the first preset duration is 0. In another optional implementation, a length of the second duration may be greater than a length of the first duration. In this case, the first preset duration is a value greater than 0. In this way, determining duration "second duration" for determining whether the master clock device is in the faulty state may have an offset (first preset duration) relative to the "first duration", and can be more realistic in an actual operation. False determining that may be caused by a delay of a signal transmitted on a link can be reduced. The first duration meets one of the following content: The first message is different from a first synchronization packet, and the first duration is less than duration between moments for sending two adjacent first synchronization packets by the master clock device to the slave clock device, where the first synchronization packet includes time information of the master clock device. Alternatively, the first message is different from a first announcement packet, and the first duration is less than duration between moments for sending two adjacent first announcement packets by the master clock device to the slave clock device, where the first announcement packet includes capability indication information of the master clock device. Alternatively, the first message is different from a first synchronization packet, the first message is different from a first announcement packet, and the first duration is less than third duration, where the third duration is a smaller value in duration between moments for sending two adjacent first synchronization packets by the master clock device to the slave clock device and duration between moments for sending two adjacent first announcement packets by the master clock device to the slave clock device. Alternatively, the first message is a first synchronization packet, and the first duration is less than duration between moments for sending two adjacent second synchronization packets by the master clock device to a switch device, where the second synchronization packet includes time information of the master clock device. Alternatively, the first message is a first announcement packet, and the first duration is less than duration between moments for sending two adjacent second announcement packets by the master clock device to a switch device, where the second announcement packet includes capability indication information of the master clock device.

When the communications device 1301 is the slave clock device, in a possible implementation, the transceiver 1303 is specifically configured to perform one of the following content: sending a second announcement packet, where the second announcement packet includes capability indication information of the slave clock device and the first indication information; sending a second synchronization packet, where the second synchronization packet includes the time information of the slave clock device and the first indication information; sending a preset bit sequence, where the preset bit sequence includes the first indication information; or sending preset frame encapsulation signaling, where the preset frame encapsulation signaling includes the first indication information.

When the communications device 1301 corresponds to the first communications device in the foregoing methods, the communications device may include a processor 1302, a transceiver 1303, and a memory 1304. The memory 1304 is configured to store instructions. The processor 1302 is configured to execute the instructions stored in the memory 1304, to implement the related solution of the first communications device in one or more of the corresponding methods shown in FIG. 1 to FIG. 4.

When the communications device 1301 is the first communications device, in a possible implementation, the transceiver 1303 is configured to receive first indication information sent by a slave clock device, where the first indication information indicates to synchronize with a system clock based on time information of the slave clock device. The processor 1302 is configured to: obtain the time information of the slave clock device; and synchronize with the system clock of the communications device based on the time information of the slave clock device.

When the communications device 1301 is the first communications device, in a possible implementation, duration between a moment for most recently receiving a first synchronization packet sent by a master clock device and a moment for receiving the first indication information is less than duration between moments for receiving two adjacent first synchronization packets. Alternatively, duration between a moment for most recently receiving a first announcement packet sent by a master clock device and a moment for receiving the first indication information is less than duration between moments for receiving two adjacent first announcement packets. Alternatively, duration between a moment for most recently receiving a first synchronization packet sent by a master clock device and a moment for receiving the first indication information is less than third duration, where the third duration is a smaller value in duration between moments for receiving two adjacent first synchronization packets and duration between moments for receiving two adjacent first announcement packets. Alternatively, duration between a moment for most recently receiving a first announcement packet sent by a master clock device and a moment for receiving the first indication information is less than third duration, where the third duration is a smaller value in duration between moments for receiving two adjacent first synchronization packets and duration between moments for receiving two adjacent first announcement packets.

When the communications device 1301 is the first communications device, in a possible implementation, the transceiver 1303 is specifically configured to perform one of the following content: obtaining the first indication information based on a received second announcement packet sent by the slave clock device, where the second announcement packet includes capability indication information of the slave clock device and the first indication information; obtaining the first indication information based on a received second synchronization packet sent by the slave clock device, where the second synchronization packet includes the time information of the slave clock device and the first indication information; obtaining the first indication information based on a received preset bit sequence sent by the slave clock device, where the preset bit sequence includes the first indication information; or obtaining the first indication information based on received preset frame encapsulation signaling sent by the slave clock device, where the preset frame encapsulation signaling includes the first indication information.

When the communications device 1301 is the first communications device, in a possible implementation, the processor 1302 is specifically configured to determine the time information of the slave clock device from pre-maintained time information of the slave clock device. Alternatively, the transceiver 1303 is specifically configured to receive the second synchronization packet sent by the slave clock device, where the second synchronization packet includes the time information of the slave clock device.

When the communications device 1301 is the first communications device, in a possible implementation, the transceiver 1303 is further configured to send the first indication information to another node.

When the communications device 1301 corresponds to the master clock device in the foregoing methods, the communications device may include a processor 1302, a transceiver 1303, and a memory 1304. The memory 1304 is configured to store instructions. The processor 1302 is configured to execute the instructions stored in the memory 1304, to implement the related solution of the master clock device in one or more of the corresponding methods shown in FIG. 1 to FIG. 4.

When the communications device 1301 is the master clock device, in a possible implementation, the processor 1302 is configured to send second indication information to a slave clock device by using the transceiver 1303 based on a working status of the master clock device, where the second indication information indicates the working status of the master clock device. In this way, the slave clock device can monitor the working status of the master clock device.

When the communications device 1301 is the master clock device, in a possible implementation, the processor 1302 is specifically configured to: if the master clock device is in a normal working state, output a first level signal over a link connected to the slave clock device, or if the master clock device is in a faulty state, output a second level signal over a link connected to the slave clock device.

When the communications device 1301 is the master clock device, in a possible implementation, the processor 1302 is specifically configured to: if the master clock device is in a normal working state, output a signal over a link connected to the slave clock device, where the signal is an electrical signal or an optical signal; or if the master clock device is in a faulty state, stop sending a signal over a link connected to the slave clock device.

When the communications device 1301 is the master clock device, in a possible implementation, the processor 1302 is specifically configured to: if the master clock device is in a normal working state, periodically send a first message to the slave clock device by using the transceiver 1303 by using first duration as a periodicity. The first duration meets one of the following content: The first message is different from a first synchronization packet, and the first duration is less than duration between moments for sending two adjacent first synchronization packets by the master clock device to the slave clock device, where the first synchronization packet includes time information of the master clock device. Alternatively, the first message is different from a first announcement packet, and the first duration is less than duration between moments for sending two adjacent first announcement packets by the master clock device to the slave clock device, where the first announcement packet includes capability indication information of the master clock device. Alternatively, the first message is different from a first synchronization packet, the first message is different from a first announcement packet, and the first duration is less than third duration, where the third duration is a smaller value in duration between moments for sending two adjacent first synchronization packets by the master clock device to the slave clock device and duration between moments for sending two adjacent first announcement packets by the master clock device to the slave clock device. Alternatively, the first message is a first synchronization packet, and the first duration is less than duration between moments for sending two adjacent second synchronization packets by the master clock device to a switch device, where the second synchronization packet includes time information of the master clock device. Alternatively, the first message is a first announcement packet, and the first duration is less than duration between moments for sending two adjacent second announcement packets by the master clock device to a switch device, where the second announcement packet includes capability indication information of the master clock device.

For concepts, explanations, detailed descriptions, and other steps of the communication device that are related to the technical solutions provided in embodiments of this application, refer to the descriptions of the content in the foregoing method embodiments or other embodiments. Details are not described herein again.

According to the foregoing methods, FIG. 6 is a schematic diagram of a structure of a communications device according to an embodiment of this application. As shown in FIG. 6, the communications device 1401 may include a communications interface 1403, a processor 1402, and a memory 1404. The communications interface 1403 is configured to input and/or output information. The processor 1402 is configured to execute a computer program or instructions, so that the communications device 1401 implements the method on the slave clock device side in the related solutions of FIG. 1 to FIG. 4, or the method on the first communications device side in the related solutions of FIG. 1 to FIG. 4, or the method on the master clock device side in the related solutions of FIG. 1 to FIG. 4. In embodiments of this application, the communications interface 1403 may implement the solution implemented by the transceiver 1303 in FIG. 5, the processor 1402 may implement the solution implemented by the processor 1302 in FIG. 5, and the memory 1404 may implement the solution implemented by the memory 1304 in FIG. 5. Details are not described herein.

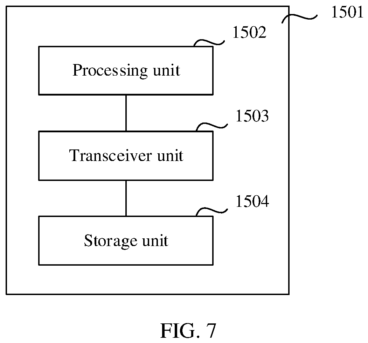

Based on the foregoing embodiments and a same concept, FIG. 7 is a schematic diagram of a communications device according to an embodiment of this application. As shown in FIG. 7, the communications device 1501 may be a slave clock device, a master clock device, or a first communications device, or may be a chip or a circuit, for example, a chip or a circuit that may be disposed on the slave clock device, or a chip or a circuit that may be disposed on the master clock device, or a chip or a circuit that may be disposed on the first communications device.

When the communications device 1501 corresponds to the slave clock device in the foregoing methods, the communications device may include a processing unit 1502, a transceiver unit 1503, and a storage unit 1504. The storage unit 1504 is configured to store instructions. The processing unit 1502 is configured to execute the instructions stored in the storage unit 1504, to implement the related solution of the slave clock device in one or more of the corresponding methods shown in FIG. 1 to FIG. 4.

When the communications device 1501 is the slave clock device, in a possible implementation, the processing unit 1502 is configured to: monitor a working status of a master clock device, where the working status includes a normal working state or a faulty state; and when determining that the master clock device is in the faulty state, send first indication information by using the transceiver unit 1503, where the first indication information indicates to synchronize with a system clock based on time information of the slave clock device.

When the communications device 1501 corresponds to the first communications device in the foregoing methods, the communications device may include a processing unit 1502, a transceiver unit 1503, and a storage unit 1504. The storage unit 1504 is configured to store instructions. The processing unit 1502 is configured to execute the instructions stored in the storage unit 1504, to implement the related solution of the first communications device in one or more of the corresponding methods shown in FIG. 1 to FIG. 4.

When the communications device 1501 is the first communications device, in a possible implementation, the transceiver unit 1503 is configured to receive first indication information sent by a slave clock device, where the first indication information indicates to synchronize with a system clock based on time information of the slave clock device. The processing unit 1502 is configured to: obtain the time information of the slave clock device; and synchronize with the system clock of the communications device based on the time information of the slave clock device.

When the communications device 1501 corresponds to the master clock device in the foregoing methods, the communications device may include a processing unit 1502, a transceiver unit 1503, and a storage unit 1504. The storage unit 1504 is configured to store instructions. The processing unit 1502 is configured to execute the instructions stored in the storage unit 1504, to implement the related solution of the master clock device in one or more of the corresponding methods shown in FIG. 1 to FIG. 4.

When the communications device 1501 is the master clock device, in a possible implementation, the processing unit 1502 is configured to send second indication information to a slave clock device by using the transceiver unit 1503 based on a working status of the master clock device, where the second indication information indicates the working status of the master clock device. In this way, the slave clock device can monitor the working status of the master clock device.

For concepts, explanations, detailed descriptions, and other steps of the communication device that are related to the technical solutions provided in embodiments of this application, refer to the descriptions of the content in the foregoing method embodiments or other embodiments. Details are not described herein again.

It may be understood that, for functions of the units in the communications device 1501, refer to implementation of corresponding method embodiments. Details are not described herein again.

It should be understood that division into the foregoing units of the communication device is merely logical function division. During actual implementation, all or a part of the units may be integrated into one physical entity, or may be physically separated. In embodiments of this application, the transceiver unit 1503 may be implemented by the transceiver 1303 in FIG. 5, and the processing unit 1502 may be implemented by the processor 1302 in FIG. 5.

According to the methods provided in embodiments of this application, this application further provides a computer program product. The computer program product includes computer program code. When the computer program code is run on a computer, the computer is enabled to perform the method in any one of the embodiments shown in FIG. 1 to FIG. 4.

According to the methods provided in embodiments of this application, this application further provides a computer-readable medium. The computer-readable medium stores program code. When the program code is run on a computer, the computer is enabled to perform the method in any one of the embodiments shown in FIG. 1 to FIG. 4.

According to the methods provided in embodiments of this application, this application further provides a system. The system includes the foregoing slave clock device, master clock device, and one or more first communications device.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The network device and the terminal device in the foregoing device embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system and/or a distributed system, and/or across a network such as the internet interacting with other systems by using the signal).

A person of ordinary skill in the art may be aware that illustrative logical blocks (illustrative logical blocks) and steps (steps) described with reference to embodiments disclosed in this specification can be implemented by electronic hardware or a combination of computer software and electronic hardware. Whether functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed operating process of the foregoing systems, devices, and units, refer to corresponding processes in the foregoing method embodiments, and details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A clock switching method, comprising:
monitoring, by a slave clock device, a working status of a master clock device, wherein the working status comprises a normal working state or a faulty state; and
when the slave clock device determines that the master clock device is in the faulty state, sending, by the slave clock device, first indication information, wherein the first indication information indicates to synchronize with a system clock based on time information of the slave clock device.

2. The method according to claim 1, wherein the monitoring, by a slave clock device, a working status of a master clock device comprises:
continuously or periodically monitoring, by the slave clock device, the working status of the master clock device.

3. The method according to claim 2, wherein the continuously monitoring, by the slave clock device, the working status of the master clock device comprises:
continuously monitoring, by the slave clock device, the working status of the master clock device by using a signal that is output over a link connected to the master clock device, wherein the signal comprises an electrical signal or an optical signal, and the signal is used to indicate that the master clock device is in the normal working state; and
that the slave clock device determines that the master clock device is in the faulty state comprises:
if the slave clock device does not receive the signal over the link, determining that the master clock device is in the faulty state.

4. The method according to claim 2, wherein the continuously monitoring, by the slave clock device, the working status of the master clock device comprises:
continuously monitoring, by the slave clock device, the working status of the master clock device by using an electrical signal that is output over a link connected to the master clock device, wherein the electrical signal comprises a first level signal and a second level signal, the first level signal is used to indicate that the master clock device is in the working state, and the second level signal is used to indicate that the master clock device is in the faulty state; and
that the slave clock device determines that the master clock device is in the faulty state comprises:
if the electrical signal received by the slave clock device over the link is the second level signal, determining that the master clock device is in the faulty state.

5. The method according to claim 1 or 2, wherein the periodically monitoring, by the slave clock device, the working status of the master clock device comprises:
monitoring, by the slave clock device, the working status of the master clock device in a manner of periodically receiving a first message by using first duration as a periodicity; and
that the slave clock device determines that the master clock device is in the faulty state comprises:
if the slave clock device does not successfully receive a next first message within second duration after the slave clock device most recently receives the first message, determining that the master clock device is in the faulty state, wherein the second duration comprises the first duration and first preset duration, and
the first duration meets one of the following content:
the first duration is less than duration between moments for sending two adjacent first synchronization packets by the master clock device to the slave clock device, wherein the first synchronization packet comprises time information of the master clock device; or
the first duration is less than duration between moments for sending two adjacent first announcement packets by the master clock device to the slave clock device, wherein the first announcement packet comprises capability indication information of the master clock device; or
the first duration is less than third duration, wherein the third duration is a smaller value in duration between moments for sending two adjacent first synchronization packets by the master clock device to the slave clock device and duration between moments for sending two adjacent first announcement packets by the master clock device to the slave clock device; or
the first duration is less than duration between moments for sending two adjacent second synchronization packets by the master clock device to a switch device, wherein the second synchronization packet comprises time information of the master clock device; or
the first duration is less than duration between moments for sending two adjacent second announcement packets by the master clock device to a switch device, wherein the second announcement packet comprises capability indication information of the master clock device.

6. The method according to any one of claims 1 to 4, wherein the sending, by the slave clock device, first indication information comprises one of the following content:
sending, by the slave clock device, a second announcement packet, wherein the second announcement packet comprises capability indication information of the slave clock device and the first indication information;
sending, by the slave clock device, a second synchronization packet, wherein the second synchronization packet comprises the time information of the slave clock device and the first indication information;
sending, by the slave clock device, a preset bit sequence, wherein the preset bit sequence comprises the first indication information; and
sending, by the slave clock device, preset frame encapsulation signaling, wherein the preset frame encapsulation signaling comprises the first indication information.

7. A clock switching method, comprising:
receiving, by a communications device, first indication information sent by a slave clock device;
obtaining, by the communications device, time information of the slave clock device; and
synchronizing, by the communications device, with a system clock of the communications device based on the first indication information and the time information of the slave clock device.

8. The method according to claim 7, wherein duration between a moment for most recently receiving, by the communications device, a first synchronization packet sent by a master clock device and a moment for receiving the first indication information by the communications device is less than duration between moments for receiving two adjacent first synchronization packets; or
duration between a moment for most recently receiving, by the communications device, a first announcement packet sent by a master clock device and a moment for receiving the first indication information by the communications device is less than duration between moments for receiving two adjacent first announcement packets; or
duration between a moment for most recently receiving, by the communications device, a first synchronization packet sent by a master clock device and a moment for receiving the first indication information by the communications device is less than third duration, wherein the third duration is a smaller value in duration between moments for receiving two adjacent first synchronization packets and duration between moments for receiving two adjacent first announcement packets; or
duration between a moment for most recently receiving, by the communications device, a first announcement packet sent by a master clock device and a moment for receiving the first indication information by the communications device is less than third duration, wherein the third duration is a smaller value in duration between moments for receiving two adjacent first synchronization packets and duration between moments for receiving two adjacent first announcement packets.

9. The method according to claim 7 or 8, wherein the receiving, by a communications device, first indication information comprises one of the following content:
obtaining, by the communications device, the first indication information based on a received second announcement packet sent by the slave clock device, wherein the second announcement packet comprises capability indication information of the slave clock device and the first indication information;
obtaining, by the communications device, the first indication information based on a received second synchronization packet sent by the slave clock device, wherein the second synchronization packet comprises the time information of the slave clock device and the first indication information;
obtaining, by the communications device, the first indication information based on a received preset bit sequence sent by the slave clock device, wherein the preset bit sequence comprises the first indication information; or
obtaining, by the communications device, the first indication information based on received preset frame encapsulation signaling sent by the slave clock device, wherein the preset frame encapsulation signaling comprises the first indication information.

10. The method according to any one of claims 7 to 9, wherein the obtaining, by the communications device, time information of the slave clock device comprises:
determining, by the communications device, the time information of the slave clock device from pre-maintained time information of the slave clock device; or
receiving, by the communications device, the second synchronization packet sent by the slave clock device, wherein the second synchronization packet comprises the time information of the slave clock device.

11. The method according to any one of claims 7 to 10, wherein after the receiving, by a communications device, first indication information, the method further comprises:
sending, by the communications device, the first indication information to another node.

12. A slave clock device, comprising:
a processor, configured to: monitor a working status of a master clock device, wherein the working status comprises a normal working state or a faulty state; and
when determining that the master clock device is in the faulty state,
send first indication information by using a transceiver, wherein the first indication information indicates to synchronize with a system clock based on time information of the slave clock device.

13. The slave clock device according to claim 12, wherein the processor is specifically configured to:
continuously or periodically monitor the working status of the master clock device.

14. The slave clock device according to claim 13, wherein the processor is specifically configured to:
continuously monitor the working status of the master clock device by using a signal that is output over a link connected to the master clock device, wherein the signal comprises an electrical signal or an optical signal, and the signal is used to indicate that the master clock device is in the normal working state; and
if the signal is not received over the link, determine that the master clock device is in the faulty state.

15. The slave clock device according to claim 13, wherein the processor is specifically configured to:
continuously monitor the working status of the master clock device by using an electrical signal that is output over a link connected to the master clock device, wherein the electrical signal comprises a first level signal and a second level signal, the first level signal in the electrical signal is used to indicate that the master clock device is in the working state, and the second level signal in the electrical signal is used to indicate that the master clock device is in the faulty state; and
if the electrical signal received over the link is the second level signal, determine that the master clock device is in the faulty state.

16. The slave clock device according to claim 12 or 13, wherein the processor is specifically configured to:
monitor the working status of the master clock device in a manner of periodically receiving a first message by using first duration as a periodicity; and
if a next first message is not successfully received within second duration after the first message is most recently received, determine that the master clock device is in the faulty state, wherein the second duration comprises the first duration and first preset duration, and
the first duration meets one of the following content:
the first duration is less than duration between moments for sending two adjacent first synchronization packets by the master clock device to the slave clock device, wherein the first synchronization packet comprises time information of the master clock device; or
the first duration is less than duration between moments for sending two adjacent first announcement packets by the master clock device to the slave clock device, wherein the first announcement packet comprises capability indication information of the master clock device; or
the first message is different from a first announcement packet, and the first duration is less than third duration, wherein the third duration is a smaller value in duration between moments for sending two adjacent first synchronization packets by the master clock device to the slave clock device and duration between moments for sending two adjacent first announcement packets by the master clock device to the slave clock device; or
the first duration is less than duration between moments for sending two adjacent second synchronization packets by the master clock device to a switch device, wherein the second synchronization packet comprises time information of the master clock device; or
the first duration is less than duration between moments for sending two adjacent second announcement packets by the master clock device to a switch device, wherein the second announcement packet comprises capability indication information of the master clock device.

17. The slave clock device according to any one of claims 12 to 15, wherein the transceiver is specifically configured to perform one of the following content:
sending a second announcement packet, wherein the second announcement packet comprises capability indication information of the slave clock device and the first indication information;
sending a second synchronization packet, wherein the second synchronization packet comprises the time information of the slave clock device and the first indication information;
sending a preset bit sequence, wherein the preset bit sequence comprises the first indication information; or
sending preset frame encapsulation signaling, wherein the preset frame encapsulation signaling comprises the first indication information.

18. A communications device, comprising:
a transceiver, configured to receive first indication information sent by a slave clock device; and
a processor, configured to: obtain time information of the slave clock device; and synchronize with a system clock of the communications device based on the first indication information and the time information of the slave clock device.

19. The communications device according to claim 18, wherein duration between a moment for most recently receiving a first synchronization packet sent by a master clock device and a moment for receiving the first indication information is less than duration between moments for receiving two adjacent first synchronization packets; or
duration between a moment for most recently receiving a first announcement packet sent by a master clock device and a moment for receiving the first indication information is less than duration between moments for receiving two adjacent first announcement packets; or
duration between a moment for most recently receiving a first synchronization packet sent by a master clock device and a moment for receiving the first indication information is less than third duration, wherein the third duration is a smaller value in duration between moments for receiving two adjacent first synchronization packets and duration between moments for receiving two adjacent first announcement packets; or
duration between a moment for most recently receiving a first announcement packet sent by a master clock device and a moment for receiving the first indication information is less than third duration, wherein the third duration is a smaller value in duration between moments for receiving two adjacent first synchronization packets and duration between moments for receiving two adjacent first announcement packets.

20. The communications device according to claim 18 or 19, wherein the transceiver is specifically configured to perform one of the following content:
obtaining the first indication information based on a received second announcement packet sent by the slave clock device, wherein the second announcement packet comprises capability indication information of the slave clock device and the first indication information;
obtaining the first indication information based on a received second synchronization packet sent by the slave clock device, wherein the second synchronization packet comprises the time information of the slave clock device and the first indication information;
obtaining the first indication information based on a received preset bit sequence sent by the slave clock device, wherein the preset bit sequence comprises the first indication information; or
obtaining the first indication information based on received preset frame encapsulation signaling sent by the slave clock device, wherein the preset frame encapsulation signaling comprises the first indication information.

21. The communications device according to any one of claims 18 to 20, wherein the processor is specifically configured to determine the time information of the slave clock device from pre-maintained time information of the slave clock device; or
the transceiver is specifically configured to receive the second synchronization packet sent by the slave clock device, wherein the second synchronization packet comprises the time information of the slave clock device.

22. The communications device according to any one of claims 18 to 21, wherein the transceiver is further configured to:
send the first indication information to another node.

23. A communications device, wherein the device comprises a processor and a memory;
the memory is configured to store a computer program or instructions; and
the processor is configured to execute the computer program or the instructions in the memory, to perform the method according to any one of claims 1 to 11.

24. A communications device, wherein the device comprises a processor and a communications interface;
the communications interface is configured to input and/or output information; and
the processor is configured to execute a computer program or instructions, to perform the method according to any one of claims 1 to 11.

25. A computer-readable storage medium, wherein the computer-readable storage medium stores computer-executable instructions, and when the computer-executable instructions are invoked by a computer, the computer is enabled to perform the method according to any one of claims 1 to 11.
